(19) **Europäisches Patentamt**
**European Patent Office**
**Office européen des brevets**

(11) **EP 1 433 295 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(51) Int Cl.:
*H04L 27/00* (2006.01)     *H04Q 1/457* (2006.01)
*H04R 25/00* (2006.01)

(21) Anmeldenummer: **01971593.7**

(22) Anmeldetag: **05.10.2001**

(86) Internationale Anmeldenummer:
**PCT/CH2001/000607**

(87) Internationale Veröffentlichungsnummer:
**WO 2001/095578 (13.12.2001 Gazette 2001/50)**

(54) **VERFAHREN ZUR ÜBERPRÜFUNG DES VORHANDENSEINS EINER SIGNALKOMPONENTE UND VORRICHTUNG ZUR DURCHFÜHRUNG DES VERFAHRENS**

METHOD FOR VERIFYING THE AVAILABILITY OF A SIGNAL COMPONENT AND DEVICE FOR CARRYING OUT SAID METHOD

PROCEDE PERMETTANT DE VERIFIER LA PRESENCE D'UNE COMPOSANTE DE SIGNAL ET DISPOSITIF SERVANT A METTRE EN OEUVRE CE PROCEDE

(84) Benannte Vertragsstaaten:
**CH DE DK LI**

(43) Veröffentlichungstag der Anmeldung:
**30.06.2004 Patentblatt 2004/27**

(73) Patentinhaber: **PHONAK AG**
**8712 Stäfa (CH)**

(72) Erfinder: **ROECK, Hans-Ueli**
**CH-8634 Hombrechtikon (CH)**

(74) Vertreter: **Troesch Scheidegger Werner AG**
**Schwäntenmos 14**
**8126 Zumikon (CH)**

(56) Entgegenhaltungen:
**EP-A- 0 550 144     EP-A- 0 656 737**
**WO-A-99/51059     US-A- 5 333 191**
**US-A- 5 353 346**

EP 1 433 295 B1

**Beschreibung**

Die vorliegende Erfindung betrifft ein Verfahren nach dem Oberbegriff des Anspruchs 1, eine Anwendung des Verfahrens sowie eine Vorrichtung zur Durchführung des Verfahrens.

Die Detektion einer schmalbandigen Signalkomponente, wie einem sinusförmigen Signal, in einem Rauschsignal ist ein oft zu lösendes Problem, zu dessen Lösung verschiedene bekannte Methoden zur Verfügung stehen. So kann mit Hilfe einer Korrelationsberechnung, mit Hilfe von auf Parametrisierung basierenden Methoden, gefolgt von einer Spitzendetektion (peak picking), oder mit einer Vielzahl von Nulldurchgangszählern das Problem gelöst werden.

Alle diese bekannten Methoden weisen jedoch den Nachteil auf, dass wegen den komplexen zum Einsatz kommenden Algorithmen eine grosse Rechenleistung erforderlich ist. Dies ist insbesondere dann der Fall, wenn Sprachsignale verarbeitet werden sollen. Mögliche Anwendungsgebiete sind Telekommunikationsprodukte, Audioprodukte oder Hörgeräte, wobei im folgenden unter dem Begriff "Hörgerät" sowohl sogenannte Hörhilfen, welche zur Korrektur eines geschädigten Hörvermögens einer Person eingesetzt werden, als auch alle anderen akustischen Kommunikationssysteme, wie zum Beispiel Funkgeräte, zu verstehen sind.

Der vorliegenden Erfindung liegt daher die Aufgabe zugrunde, ein Verfahren anzugeben, das den vorstehend genannten Nachteil nicht aufweist.

Diese Aufgabe wird durch die im Kennzeichen des Anspruchs 1 aufgeführten Merkmale gelöst. Vorteilhafte Ausgestaltungen des erfindungsgemässen Verfahrens, Anwendungen des Verfahrens sowie eine Vorrichtung zur Durchführung des Verfahrens sind in weiteren Ansprüchen angegeben.

Das erfindungsgemässe Verfahren zeichnet sich durch eine Reihe von äusserst einfachen Verfahrensschritten aus, zu deren Ausführung eine geringe Rechenleistung erforderlich ist. Somit eignet sich das erfindungsgemässe Verfahren insbesondere zur Anwendung in Systemen mit eingeschränkter Energieversorgung, beispielsweise bei netzunabhängigen, portablen Geräten, oder für Systeme, bei denen das Vorhandensein einer Signalkomponente sehr rasch bestimmt werden muss.

In Weiterführung der Erfindung wird vorgeschlagen, das erfindungsgemässe Verfahren zur Detektion und Elimination von Signalrückkopplungen zu verwenden.

Signalrückkopplung ist ein bekanntes Problem bei Hörgeräten, bei mobilen Telefonen und anderen Telekommunikationsprodukten. Eine Reihe von Lösungen wurde durch die Telekommunikationsbranche erarbeitet. So wurde bereits vorgeschlagen, die Signale im Signalrückkopplungspfad durch entsprechende Einstellung der Dämpfung in der Übertragungsfunktion im Rückkopplungspfad zu dämpfen. Des weiteren wurde die Anwendung von Auto- und/oder Kreuzkorrelations-Schemen vorgesehen, bei denen die Korrelation des Eingangssignals und des Ausgangssignals entweder im Zeitbereich oder im Frequenzbereich berechnet werden. Das Resultat der Berechnungen wird zur Einstellung der Übertragungsfunktion im Signalrückkopplungspfad unter Verwendung von LMS-(Least Mean Square)-Algorithmen verwendet (feedback canceler). Alternativ wird das Resultat der Berechnungen zur Einstellung der Übertragungsfunktion im Vorwärtspfad verwendet, wobei die Kreisverstärkung (loop gain) an kritischen Frequenzen reduziert wird.

Für weiterführende Angaben zu den bekannten Verfahren wird stellvertretend auf die folgenden Druckschriften verwiesen: US-5 680 467, EP-0 656 737, WO 99/26453, WO 99/51059, DE-197 48 079.

Die bekannten Verfahren werden zwar meist erfolgreich eingesetzt, allerdings zeichnen sich alle dadurch aus, dass wiederum eine hohe Rechenleistung erforderlich ist, um brauchbare Resultat erhalten zu können. Gerade bei der Anwendung von bekannten Algorithmen in Hörgeräten führt dies zu einem erhöhten Energieverbrauch, womit die Betriebsdauer bis zum nächsten Aufladen oder Ersetzen der Batterien herabgesetzt ist, was grundsätzlich unerwünscht ist.

Falls die Kreisverstärkung einen Wert grösser als Eins in einem bestimmen Frequenzband erreicht und danebenliegende Frequenzen einige dB darunter liegen, wenn die Verstärkung im Vorwärtspfad erhöht wird, dann eignet sich erfindungsgemäss ein Bandsperrfilter zur Reduktion von Signalrückkopplungen. Im Falle, dass verschiedene kritische Frequenzen zu weit auseinanderliegen, können nach einer weiteren Ausführungsform der Erfindung mehrere Bandsperrfilter eingesetzt werden.

Damit die Bandsperrfilter auf die kritische Frequenz, d.h. die Rückkopplungsfrequenz, eingestellt werden können, ist diese zuerst zu detektieren. Erfindungsgemäss erfolgt dies durch Berechnung der Varianz des Masses für die Frequenz des Eingangssignals, wobei Signalrückkopplung detektiert wird, falls die Varianz unter einen vorgegebenen Schwellwert absinkt.

Die Erfindung wird nachfolgend anhand von Zeichnungen beispielsweise näher erläutert. Dabei zeigt

Fig. 1    ein Amplitudenspektrum eines Eingangssignals mit einer überlagerten, schmalbandigen Signalkomponente,

Fig. 2    ein Blockschaltdiagramm einer Schaltungsanordnung zur Überprüfung des Vorhandenseins der Signalkomponente im Eingangssignal,

Fig. 3    ein Blockschaltdiagramm einer Schaltungsanordnung zur Detektion und Elimination einer Signalrückkopplungskomponente und

Fig. 4    eine weitere, spezifischere Ausführungsform einer Schaltungsanordnung gemäss Fig. 3.

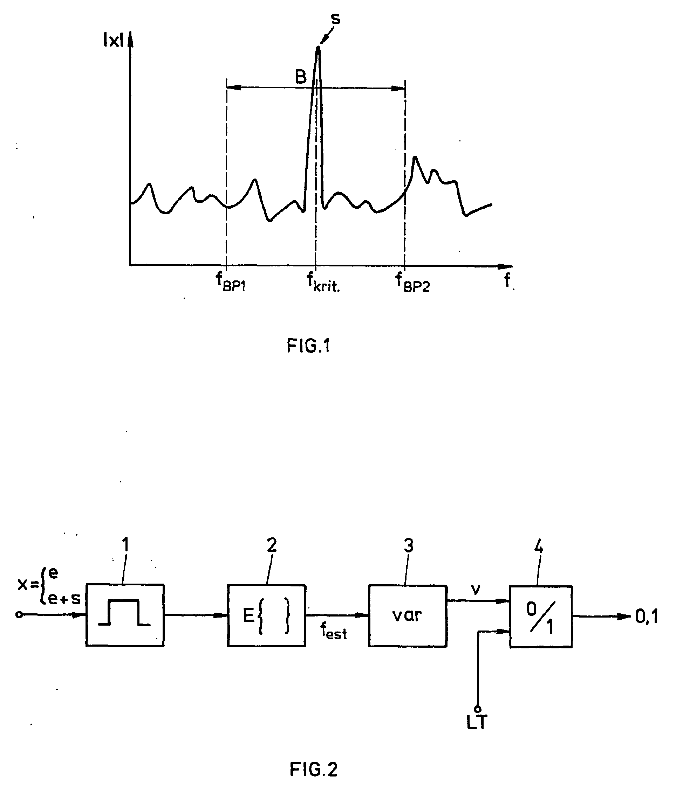

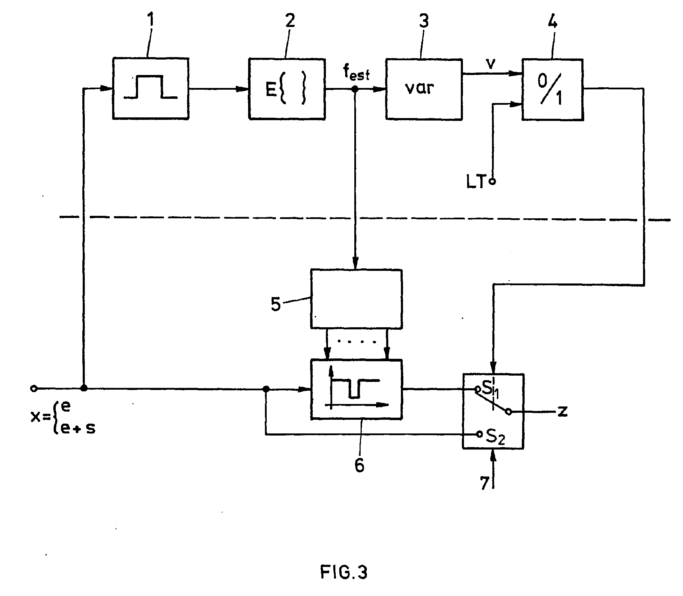

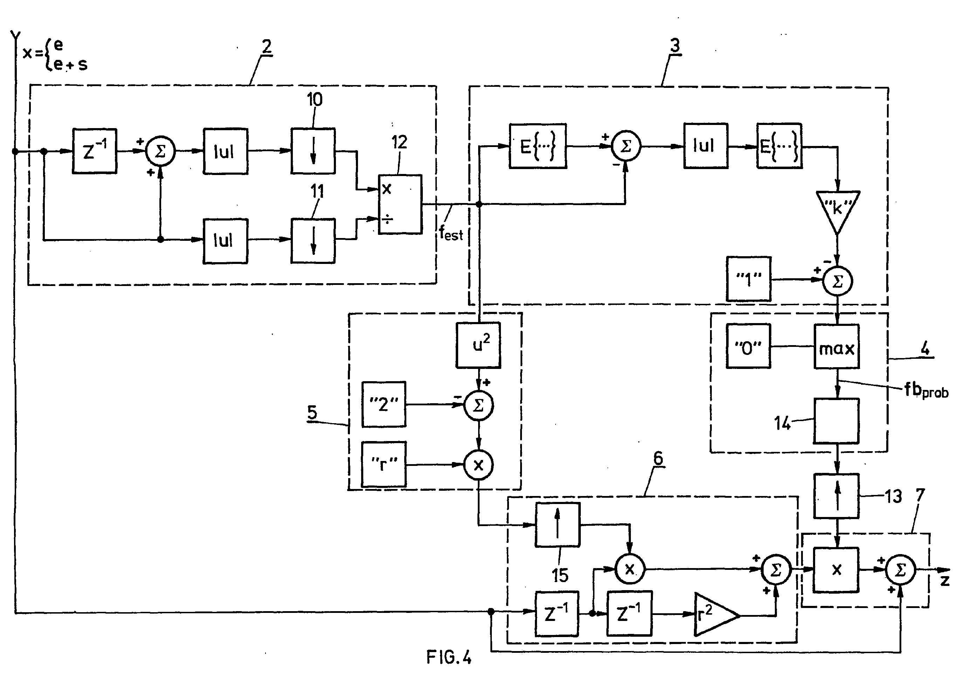

In Fig. 1 ist ein Amplitudenspektrum, d.h. die Amplitude eines Eingangssignals x in Funktion der Frequenz f, dargestellt. In einem Frequenzband B, welches durch die untere und obere Frequenz $f_{BP1}$ bzw. $f_{BP2}$ begrenzt ist, ist eine schmalbandige Signalkomponente s mit einer Mittenfrequenz $f_{krit}$ erkennbar. Die Amplitude an der Frequenz $f_{krit}$ liegt um einige dB höher als der Rest des Eingangssignals x im Frequenzband B. In einer ersten Ausführungsform der Erfindung ist vorgesehen, das Vorhandensein der Signalkomponente s zu detektieren. Eine hierzu verwendbare Schaltungsanordnung ist schematisch in Fig. 2 dargestellt. In einer zweiten Ausführungsform der Erfindung ist vorgesehen, eine detektierte Signalkomponente s, welche beispielsweise als Folge einer Signalrückkopplung entstanden ist, aus dem Eingangssignal x zu eliminieren, zumindest aber in einem gewünschten Mindestmass zu dämpfen. Hierzu verwendbare Schaltungsanordnungen sind schematisch in den Fig. 3 und 4 dargestellt.

Gemäss Fig. 2 sind eine Reihe von Funktionseinheiten hintereinander geschaltet, beginnend mit einem Bandpassfilter 1, einer Estimatoreinheit 2, einer Varianzeinheit 3 und einer Komparatoreinheit 4. Das Eingangssignal x, das entweder aus einem Nutzsignal e oder aus einem Nutzsignal e mit überlagerter Signalkomponente s besteht, wird dem Bandpassfilter 1 zugeführt, dessen Grenzfrequenzen gemäss Fig. 1 an den oberen und unteren Frequenzen $f_{BP1}$ und $f_{BP2}$ liegen, wobei angenommen wird, dass die Signalkomponente s, falls vorhanden; innerhalb des Frequenzbandes B (Fig. 1) liegt. Das bandbegrenzte Eingangssignal, d.h. das Ausgangssignal des Bandpassfilters 1, wird der Estimatoreinheit 2 beaufschlagt, in der ein Mass $f_{est}$ für die Frequenz des Eingangssignals x ermittelt wird.

Unter dem Mass $f_{est}$ für die Frequenz des Eingangssignals x ist grundsätzlich irgend eine frequenzabhängige Funktion gemeint.

Es wird vorgeschlagen, dass als erste Funktion $y_1$ der Erwartungswert der Amplitude eines Tiefpassfilters verwendet wird. In zeitdiskreter Form kann eine solche Funktion wie folgt angegeben werden:

$$y_1(n) = E\{|x(n) + x(n-1)|\}$$

resp. in der z-Ebene

$$Y_1(z) = E\{|1 + z^{-1}| \cdot |X(z)|\},$$

wobei vorzugsweise eine Normalisierung mit dem Pegel des Eingangssignals x vorgenommen wird, damit der Pegel selbst nicht in das Mass $f_{est}$ für die Frequenz einfliesst. Aus dem letztgenannten Grund werden zwei Funktionen benötigt, von denen zumindest eine von der Frequenz abhängig ist.

Als zweite Funktion $y_2$ wird ein entsprechender Hochpassfilter, oder noch einfacher, lediglich der Erwartungswert der Amplitude des Eingangssignals x, gewählt:

$$y_2 = E\{|x(n)|\}$$

Indem nun die Funktion $y_1$ durch die Funktion $y_2$ dividiert wird, erhält man ein Amplituden-unabhängiges gewünschtes Mass $f_{est}$ für die Frequenz des Eingangssignals x, nämlich:

$$f_{est}(n) = \frac{E\{|x(n) + x(n-1)|\}}{E\{|x(n)|\}} = \sqrt{2 \cdot (1 + \cos \omega)},$$

wobei $\omega$ die Kreisfrequenz ist.

Die Bestimmung des Erwartungswertes kann auch durch einen Mittelwertbildner erster Ordnung angenähert werden, der durch die folgende Formel beschrieben werden kann:

$$y(n) = |x(n)| + \beta \cdot \left( y(n-1) - |x(n)| \right),$$

wobei

$$\beta = e^{-\frac{T}{\tau}}$$

und wobei T das Abtastintervall und $\tau$ eine Zeitkonstante mit einem ungefähren Wert von 20 ms entspricht.

Ob nun eine Signalkomponente s im Eingangssignal x vorhanden ist, kann dadurch ermittelt werden, dass die Varianz v des Masses $f_{est}$ für die Frequenz ermittelt wird. Hierzu ist die Varianzeinheit 3 gemäss Fig. 2 vorgesehen. Liegt die Varianz v unter einem vorgegebenen Schwellwert LT, kann davon ausgegangen werden, dass eine schmalbandige, frequenzstabile Signalkomponente s in der Bandbreite B (Fig. 1) vorhanden ist. Voraussetzung der vorstehenden Ausführungen ist, dass die Signalkomponente s, sofern vorhanden, eine gewisse Stabilität aufweist und dass das Nutzsignal e in diesem Sinne instabil ist. Angaben zur Berechnung der Varianz können beispielsweise dem Standardwerk von Athanasios Papoulis mit dem Titel "Probability, Random Variables, and Stochastic Processes" (McGraw-Hill, 1984, S. 108 ff.) entnommen werden.

Der erwähnte Vergleich zwischen berechneter Varianz v und vorgegebenem Schwellwert LT erfolgt in der Komparatoreinheit 4, deren Ausgangssignal entweder eine Null oder eine Eins ist, abhängig davon, ob die Varianz v grösser als der Schwellwert LT ist oder umgekehrt.

Das anhand von Fig. 2 beschriebene erfindungsgemässe Verfahren eignet sich insbesondere zur Detektion eines Tastendruckes bei einem Telekommunikationsendgerät mit Tontastenwahl. Bekanntlich wird bei einem solchen Endgerät jede der zwölf Tasten mit jeweils zwei von insgesamt sieben sinusförmigen Signalen codiert, wobei die Frequenzen der Signale bekannt sind. Die Detektion eines Tastendruckes ist daher beschränkt auf die Überprüfung des Vorhandenseins von Signalen mit vorgegebenen Frequenzen. Je nach den zwei detektierten Frequenzen kann auf die gedrückte Taste geschlossen werden, wobei die Schaltungsanordnung gemäss Fig. 2 zum Einsatz kommt, und zwar für jedes mögliche Signal einmal. Das Bandpassfilter ist dabei so eingestellt, dass lediglich ein Signal das Bandpassfilter passieren kann. Selbstverständlich besteht auch die Möglichkeit, dass eine Filterbank, bestehend aus sieben Bandpassfiltern, zur Selektion der einzelnen möglichen Signale bereitgestellt wird, und dass die nachfolgende Weiterverarbeitung der Signale in der Estimatoreinheit 2, der Varianzeinheit 3 und in der Komparatoreinheit 4 im Zeitmultiplexverfahren vorgenommen wird.

In Fig. 3 ist ein Blockdiagramm einer weiteren Ausführungsvariante dargestellt, die auf der in Fig. 2 gezeigten aufbaut. So entspricht das oberhalb der strichlinierten Linie gezeigte Blockschaltdiagramm exakt demjenigen gemäss Fig. 2. Zusätzlich ist nun, unterhalb der strichlinierten Linie in Fig. 3, eine Filtereinheit 6, eine Koeffizientenberechnungseinheit 5 und eine Schalteinheit 7 vorgesehen.

Das dem Bandpassfilter 1 beaufschlagte Eingangssignal x wird zusätzlich der Filtereinheit 6 und einem von zwei Schalterkontakt S2 der Schalteinheit 7 zugeführt. Das Ausgangssignal der Filtereinheit 6 ist mit dem weiteren Schalterkontakt S1 verbunden. Ferner wird das Mass $f_{est}$ für die Frequenz des Eingangssignals x der Koeffizientenberechnungseinheit 5 zugeführt, in der die Koeffizienten des in der Filtereinheit 6 implementierten Filters in noch zu erläuternder Weise berechnet werden. Die berechneten Koeffizienten werden in der Folge der Filtereinheit 6 übergeben. Die Bestimmung des Masses $f_{est}$ für die Frequenz kann in einer der anhand von Fig. 2 erläuterten Weise erfolgen.

Schliesslich wird in der Schalteinheit 7 aufgrund eines in der Komparatoreinheit 4 erzeugten Steuersignals entweder das Eingangssignal x direkt oder das Ausgangssignal der Filtereinheit 6 auf den Ausgang z geschaltet. Mit anderen Worten wird das Eingangssignal x entweder in der Filtereinheit 6 gefiltert oder das Eingangssignal x wird ohne Verarbeitung an den Ausgang z gegeben. Diese Umschaltung lässt sich bevorzugterweise auch "weich", d.h. mit einem weichen Übergang bewerkstelligen.

Damit lässt sich das erfindungsgemässe Verfahren bzw. die erfindungsgemässe Vorrichtung vorzüglich zur Detektion und Elimination eines Rückkopplungssignals verwenden, und zwar sowohl bei Telekommunikationsprodukten als auch bei Hörgeräten, wobei die für die Berechnungen zur Verfügung zu stellende Rechnerleistung äusserst klein ist, so dass, insbesondere beim Einsatz in Hörgeräten, der Energieverbrauch aufgrund des zusätzlichen Rechenaufwandes in engen Grenzen gehalten werden kann.

Soll durch die Filtereinheit 6 die Signalkomponente s unterdrückt, zumindest aber gedämpft werden, so wird die Filtereinheit 6 als Bandsperrfilter realisiert, wobei der Sperrbereich des Filters mittig in bezug auf die Frequenz $f_{krit}$ zu legen ist (Fig. 1). Als Bandsperrfilter eignet sich dabei besonders eine Realisierung nach der folgenden Formel:

$$H(z) = 1 + b_1 \cdot z^{-1} + b_2 \cdot z^{-2}$$

wobei

$$b_1 = -2 \cdot r \cdot \cos\omega$$

und

$$b_2 = r^2$$

ist. Das Bandsperrfilter gemäss der vorstehenden Formel weist eine einzige Nullstelle auf, deren Entfernung vom Ursprung dem Radius r entspricht. Es wird vorgeschlagen, den Radius r zu fixieren, beispielsweise auf einen Wert 0.98, womit lediglich cos ω bestimmt werden muss, um den Koeffizienten $b_1$ bestimmen zu können. Dieser Wert lässt sich erfindungsgemäss aus dem Mass $f_{est}$ für die Frequenz des Eingangssignals x herleiten, indem man die vorstehend genannte Gleichung für das Mass $f_{est}$ nach cos ω auflöst. Daraus wird die folgende Gleichung erhalten:

$$b_1 = -2 \cdot r \cdot \left( \frac{f_{est}^2}{2} - 1 \right)$$

In einer weiteren Ausführungsform der Erfindung ist vorgesehen, das Bandsperrfilter nach folgender, allgemeinerer Formel zu bestimmen:

$$H(z) = \frac{1 + b_1 \cdot z^{-1} + b_2 \cdot z^{-2}}{1 + a_1 \cdot z^{-1} + a_2 \cdot z^{-2}} \, ,$$

wobei

$$a_1 = -2 \cdot r_P \cdot \cos\omega \, ,$$

$$b_1 = -2 \cdot r_Z \cdot \cos\omega \, ,$$

und

$$a_2 = r_P^2$$

$$b_2 = r_z^2 \ .$$

In analoger Weise werden wiederum die vorstehend genannten Gleichungen für das Mass $f_{est}$ nach $\cos\omega$ aufgelöst. Daraus werden nun zwei Gleichungen wie folgt erhalten:

$$a_1 = -2 \cdot r_P \cdot \left( \frac{f_{est}^2}{2} - 1 \right)$$

und

$$b_1 = -2 \cdot r_Z \cdot \left( \frac{f_{est}^2}{2} - 1 \right)$$

Die vorstehenden Gleichungen beschreiben somit einen Algorithmus zur Schätzung einer schmalbandigen Signalkomponente s und gleichzeitiger Eruierung von Koeffizienten für einen Bandsperrfilter zur Unterdrückung der Signalkomponente s.

In Fig. 4 ist eine spezifische Ausführungsvariante der schematischen Darstellung der Erfindung gemäss dem Blockschaltdiagramm von Fig. 3 dargestellt. Die in Fig. 3 bezeichneten Verarbeitungseinheiten sind in Fig. 4 durch strichlinierte Umrahmungen identifiziert und mit dem gleichen Hinweiszeichen versehen wie in Fig. 3.

In der Estimatoreinheit 2 ist das Blockschaltdiagramm entsprechend den Gleichungen, die in der Beschreibung im Zusammenhang mit der Fig. 2 erläutert worden sind, dargestellt. Neben den sich direkt aus den angegebenen Gleichungen ergebenden Einheiten, die hier nicht weiter erläutert werden, sind zusätzlich zwei Dezimationseinheiten 10 und 11 vorgesehen, welche sich vor einer Quotienteneinheit 12 befindet und welche die Datenrate reduzieren, um den an und für sich bereits reduzierten Rechenaufwand weiter zu reduzieren. Verfahren zur Datenratenredukion sind allgemein bekannt und können beispielsweise dem Standardwerk von R. E. Crochiere et. al. mit dem Titel "Multirate Digital Signal Processing" (Prentice-Hall Signal Processing Series, Prentice-Hall, Inc., Englewood Cliffs, New Jersey, 1983) entnommen werden. Ausreichende Antialiasingfilter werden dabei vor der eigentlichen Dezimation impliziert.

Ohne Dezimationseinheiten 10 und 11 ergibt sich am Ausgang der Estimatoreinheit 2 das Mass $f_{est}$ für die Frequenz des Eingangssignals x wie bereits anhand Fig. 2 erläutert:

$$f_{est}(n) = \frac{E\{x(n) + x(n-1)\}}{E\{x(n)\}} \ .$$

Unter Berücksichtigung der vorstehenden Ausführungen, insbesondere derjenigen im Zusammenhang mit den Blockschaltbildern in Fig. 2 und 3, wird ein Wahrscheinlichkeitsmass $fb_{prob}$ für Rückkopplung anhand des Eingangssignals x nach folgender Gleichung in der Varianzeinheit 3 resp. in der Komparatoreinheit 4 bestimmt:

$$fb_{prob} = \max\left[ 1 - k \cdot E\left\{ \left| E\{f_{est}\} - f_{est} \right| \right\}, 0 \right]$$

wobei k der Sensitivitätsparameter ist, durch dessen Grösse der Eingriffpunkt des Steuermechanismus bestimmt wird. Gemäss Fig. 4 ist $fb_{prob}$ noch nicht das Ausgangssignal der Komparatoreinheit 4, denn es erfolgt in einer Interpolationseinheit 13 noch eine Datenratentransformation entsprechend der Datenratenreduktion in den Dezimationseinheiten 10 und 11, nun jedoch in umgekehrter Richtung: In der Interpolationseinheit 13 wird der Datenstrom der ursprünglichen Datenrate des Eingangssignal x wiederum angepasst.

In vorstehender Gleichung für $fb_{prob}$ wird der Erwartungswert $E\{...\}$ wiederum in einer einfachsten Ausführungsform des erfindungsgemässen Verfahrens als Mittelwertbildner mit einer kurzen Zeitkonstante für die Signalfolge hin zu grösseren Signalwerten, jedoch mit einer langen Zeitkonstante für die Signalfolge hin zu kleineren Signalwerten, ausgestattet (fast attack - slow release). Ein entsprechender Mittelwertbildner 14 befindet sich auch am Ausgang der Komparatoreinheit 4. Damit wird das Steuerverhalten des geschlossenen Regelkreises weiter verbessert.

Demgegenüber entspricht der Erwartungswert $\overline{E}\{...\}$ einem symetrischen Mittelwertbildner, d.h. "attack"- und "release"-Zeiten sind gleich gross.

In der Filtereinheit 6 ist ein Bandsperrfilter gemäss folgender Gleichung realisiert:

$$H(z) = 1 + fb_{prob} \cdot \left( b_1 \cdot z^{-1} + b_2 \cdot fb_{prob} \cdot z^{-2} \right),$$

wobei die Koeffizienten $b_1$ und $b_2$ wie folgt bestimmbar sind und entsprechend in der Koeffizientenberechnungseinheit 5 bestimmt werden:

$$b_1 = -2 \cdot r \cdot \left( \frac{f_{est}^2}{2} - 1 \right)$$

und

$$b_2 = r^2 .$$

Der Radius r ist wiederum die Entfernung der Nullstelle zum Ursprung der z-Ebene und wird vorzugsweise fix eingestellt. Es hat sich gezeigt, dass eine Wahl von ca. 0.98 für den Radius r besonders vorteilhaft ist.

Anstelle der vorstehend angegebenen spezifischen Übertragungsfunktion für das Bandsperrfilter wird im folgenden die allgemeinere Form angegeben, die vorzugsweise zur Anwendung kommt:

$$H(z) = \frac{1 + fb_{prob} \cdot \left( b_1 \cdot z^{-1} + b_2 \cdot fb_{prob} \cdot z^{-2} \right)}{1 + fb_{prob} \cdot \left( a_1 \cdot z^{-1} + a_2 \cdot fb_{prob} \cdot z^{-2} \right)},$$

wobei

$$b_1 = -2 \cdot r_z \cdot \left( \frac{f_{est}^2}{2} - 1 \right),$$

$$a_1 = -2 \cdot r_P \cdot \left( \frac{f_{est}^2}{2} - 1 \right)$$

$$b_2 = r_z^2 \, ,$$

$$a_2 = r_P^2$$

und

$$fb_{prob} = \max\left[ 1 - k \cdot E\left\{ \left| \overline{E}\{f_{est}\} - f_{est} \right| \right\}, 0 \right]$$

ist. Mit r ist eine Konstante bezeichnet, deren Wert vorzugsweise gleich 0.98 ist; k ist ein Sensitivitätsparameter zur Einstellung der Steuercharakteristik, wobei der Wert für k vorzugsweise gleich 10 beträgt.

**Patentansprüche**

1. Verfahren zur Überprüfung des Vorhandenseins einer Signalkomponente (s) in einem Eingangssignal (x), wobei das Verfahren darin besteht,

   - dass aus dem Eingangssignal (x) ein Mass ($f_{est}$) für die Frequenz des Eingangssignals (x) erzeugt wird,
   - dass Varianz des Masses ($f_{est}$) für die Frequenz des Eingangssignals (x) ermittelt wird,
   - dass die ermittelte Varianz (v) mit einem vorgegebenen Schwellwert (LT) verglichen wird und
   - dass das Vorhandensein der Signalkomponente (s) bestätigt wird, wenn die Varianz (v) in einem vorgegebenen Bereich in bezug zum vorgegebenen Schwellwert (LT) liegt.

2. Verfahren nach Anspruch 1, **dadurch gekennzeichnet, dass** das Vorhandensein der Signalkomponente (s) bestätigt wird, wenn die Varianz (v) kleiner ist als der vorgegebene Schwellwert (LT).

3. Verfahren nach Anspruch 1 oder 2, **dadurch gekennzeichnet, dass** die Signalkomponente (s) im Eingangssignal (x) unterdrückt wird.

4. Verfahren nach einem der Ansprüche 1 bis 3, **dadurch gekennzeichnet, dass** das Eingangssignal (x) vor der Erzeugung des Masses ($f_{est}$) für die Frequenz bandbegrenzt wird.

5. Verfahren nach einem der Ansprüche 1 bis 4, **dadurch gekennzeichnet, dass** das Mass ($f_{est}$) für die Frequenz aus einem Verhältnis von mindestens zwei Funktionen bestimmt wird, wobei mindestens eine davon frequenzabhängig ist.

6. Verfahren nach Anspruch 5, **dadurch gekennzeichnet, dass** das Mass ($f_{est}$) für die Frequenz aus einem Verhältnis von zwei Funktionen bestimmt wird, wobei die eine Funktion einer Tiefpassfilterübertragungsfunktion und die andere Funktion dem Erwartungswert des Eingangssignals entspricht.

7. Verfahren nach einem der Ansprüche 3 bis 6, **dadurch gekennzeichnet, dass** zur Unterdrückung der Signalkomponente (s) im Eingangssignal (x) ein Bandsperrfilter (6) mit der folgenden Übertragungsfunktion verwendet wird:

$$H(z) = \frac{1 + b_1 \cdot z^{-1} + b_2 \cdot z^{-2}}{1 + a_1 \cdot z^{-1} + a_2 \cdot z^{-2}} \; ,$$

wobei

$$a_1 = -2 \cdot r_P \cdot \cos\omega \; ,$$

$$b_1 = -2 \cdot r_Z \cdot \cos\omega \; ,$$

und

$$a_2 = r_P^2$$

$$b_2 = r_Z^2 \; .$$

8. Verfahren nach einem der Ansprüche 3 bis 6, **dadurch gekennzeichnet, dass** zur Unterdrückung der Signalkomponente (s) im Eingangssignal (x) ein Bandsperrfilter (6) mit der folgenden Übertragungsfunktion verwendet wird:

$$H(z) = \frac{1 + fb_{prob} \cdot \left(b_1 \cdot z^{-1} + b_2 \cdot fb_{prob} \cdot z^{-2}\right)}{1 + fb_{prob} \cdot \left(a_1 \cdot z^{-1} + a_2 \cdot fb_{prob} \cdot z^{-2}\right)} \; ,$$

wobei

$$b_1 = -2 \cdot r_Z \cdot \left(\frac{f_{est}^2}{2} - 1\right) \; ,$$

$$a_1 = -2 \cdot r_P \cdot \left(\frac{f_{est}^2}{2} - 1\right)$$

$$b_2 = r_Z^2 \; ,$$

$$a_2 = r_P^2$$

und

$$fb_{prob} = \max\left[1 - k \cdot E\left\{\left|\overline{E}\{f_{est}\} - f_{est}\right|\right\}, 0\right]$$

ist

und wobei r eine Konstante ist, deren Wert vorzugsweise gleich 0.98 ist, und k ein Sensitivitätsparameter zur Einstellung der Steuercharakteristik ist, wobei der Wert für k vorzugsweise gleich 10 beträgt.

9. Anwendung des Verfahrens nach einem der Ansprüche 3 bis 8 zur Unterdrückung von Signalrückkopplung.

10. Anwendung des Verfahrens nach einem der Ansprüche 3 bis 8 zur Unterdrückung von Signalrückkopplung in einem Hörgerät.

11. Anwendung des Verfahrens nach Anspruch 1 oder 2 zur Detektion eines Tastendruckes bei einem Telekommunikationsendgerät mit Frequenzwahl.

12. Vorrichtung zur Durchführung des Verfahrens nach Anspruch 1 oder 2, **dadurch gekennzeichnet, dass** ein Eingangssignal (x) zur Bestimmung eines Masses ($f_{est}$) für die Frequenz des Eingangssignals (x) mit einer Estimatoreinheit (2) wirkverbunden ist und dass das Mass ($f_{est}$) für die Frequenz des Eingangssignals (x) einer Varianzeinheit (3) beaufschlagt ist, deren Ausgangssignal mit einer Komparatoreinheit (4) wirkverbunden ist, wobei die Komparatoreinheit (4) des weiteren mit einem vorgegebenen Schwellwert (LT) beaufschlagt ist.

13. Vorrichtung zur Durchführung des Verfahrens nach einem der Ansprüche 3 bis 8, **dadurch gekennzeichnet, dass** ein Eingangssignal (x) zur Bestimmung eines Masses ($f_{est}$) für die Frequenz des Eingangssignals (x) mit einer Estimatoreinheit (2) wirkverbunden ist, dass das Mass ($f_{est}$) für die Frequenz des Eingangssignals (x) einer Varianzeinheit (3) beaufschlagt ist, deren Ausgangssignal (v) mit einer Komparatoreinheit (4) wirkverbunden ist, wobei die Komparatoreinheit (4) des weiteren mit einem vorgegebenen Schwellwert (LT) beaufschlagt ist, dass das Mass ($f_{est}$) für die Frequenz des Eingangssignals (x) des weiteren einer Koeffizientenberechnungseinheit (5) zur Berechnung von Filterkoeffizienten beaufschlagt ist, die in eine Filtereinheit (6) übertragbar sind, die eingangsseitig mit dem Eingangssignal (x) und ausgangsseitig mit einem ersten Schalterkontakt (S1) einer Schalteinheit (7) verbunden ist, wobei das Eingangssignal (x) auf einen zweiten Schalterkontakt (S2) der Schalteinheit (7) geführt ist, und dass das Ausgangssignal der Komparatoreinheit (4) ein Steuersignal für die Schalteinheit (7) liefert, wobei hierdurch entweder das Eingangssignal (x) oder das Ausgangssignal der Filtereinheit (6) auf den Ausgang (z) der Schalteinheit (7) schaltbar ist.

14. Vorrichtung nach Anspruch 13, **dadurch gekennzeichnet, dass** die Filtereinheit (7) ein Bandsperrfilter ist.

15. Vorrichtung nach Anspruch 14, **dadurch gekennzeichnet, dass** das Bandsperrfilter Nullstellen und gegebenenfalls Polstellen aufweist, deren Positionen durch das Mass ($f_{est}$) für die Frequenz festlegbar sind.

16. Vorrichtung nach einem der Ansprüche 12 bis 15, **dadurch gekennzeichnet, dass** das Mass ($f_{est}$) für die Frequenz aus einem Verhältnis von mindestens zwei Funktionen bestimmbar ist, wobei mindestens eine davon frequenzabhängig ist.

17. Vorrichtung nach Anspruch 16, **dadurch gekennzeichnet, dass** das Mass ($f_{est}$) für die Frequenz aus einem Verhältnis von zwei Funktionen bestimmbar ist, wobei die eine Funktion einer Tiefpassfilterübertragungsfunktion und die andere Funktion dem Erwartungswert des Eingangssignals entspricht.

18. Hörgerät nach einem der Ansprüche 13 bis 17.

**Claims**

1. Method for checking an occurrence of a signal component (s) in an input signal (x), wherein the method comprises the steps of

- generating a measure ($f_{est}$) for the frequency of the input signal (x) from the input signal (x),
- determining a variance of the measure ($f_{est}$) for the frequency of the input signal (x),
- comparing the determined variance (v) with a predetermined threshold value (LT), and
- confirming the occurrence of the signal component (s) if the variance (v) lies within a predetermined range in relation to the predetermined threshold value (LT).

2. Method according to claim 1, **characterised in that** the occurrence of the signal component (s) is confirmed if the variance (v) is smaller than the predetermined threshold value (LT).

3. Method according to claim 1 or 2, **characterised in that** the signal component (s) is suppressed in the input signal (x).

4. Method according to one of the claims 1 to 3, **characterised in that** the input signal (x) is band-limited before the measure ($f_{est}$) for the frequency is generated.

5. Method according to one of the claims 1 to 4, **characterised in that** the measure ($f_{est}$) for the frequency is determined from a ratio of at least two functions, of which at least one is frequency-dependent.

6. Method according to claim 5, **characterised in that** the measure ($f_{est}$) for the frequency is determined from a ratio of two functions, wherein one of the functions corresponds to a low-pass filter transfer function and the other function corresponds to the expected value of the input signal.

7. Method according to one of the claims 3 to 6, **characterised in that** a notch filter is used to suppress the signal component (s) in the input signal (x), wherein the notch filter has the following transfer function:

$$H(z) = \frac{1 + b_1 \cdot z^{-1} + b_2 \cdot z^{-2}}{1 + a_1 \cdot z^{-1} + a_2 \cdot z^{-2}} \, ,$$

wherein

$$a_1 = -2 \cdot r_P \cdot \cos \omega \, ,$$

$$b_1 = -2 \cdot r_Z \cdot \cos \omega \, ,$$

and

$$a_2 = r_P^2$$

$$b_2 = r_Z^2 \, .$$

8. Method according to one of the claims 3 to 6, **characterised in that** a notch filter is used to suppress the signal component (s) in the input signal (x), wherein the notch filter has the following transfer function:

$$H(z) = \frac{1 + fb_{prob} \cdot \left(b_1 \cdot z^{-1} + b_2 \cdot fb_{prob} \cdot z^{-2}\right)}{1 + fb_{prob} \cdot \left(a_1 \cdot z^{-1} + a_2 \cdot fb_{prob} \cdot z^{-2}\right)},$$

wherein

$$b_1 = -2 \cdot r_z \cdot \left(\frac{f_{est}^2}{2} - 1\right),$$

$$a_1 = -2 \cdot r_P \cdot \left(\frac{f_{est}^2}{2} - 1\right)$$

$$b_2 = r_Z^2,$$

$$a_2 = r_P^2$$

and

$$fb_{prob} = \max\left[1 - k \cdot E\left\{\left|\overline{E}\{f_{est}\} - f_{est}\right|\right\}, 0\right]$$

wherein r is a constant, preferably having a value of 0.98, and k is a sensitivity parameter for adjusting the control characteristic, wherein the value for k preferably is equal to 10.

9. Use of the method according to one of the claims 3 to 8 to suppress signal feedback.

10. Use of the method according to one of the claims 3 to 8 to suppress signal feedback in a hearing device.

11. Use of the method according to claim 1 or 2 for detecting a keypress of a pushbutton of a telecommunication terminal with frequency selection.

12. Device for performing the method according to claim 1 or 2, **characterised in that** an input signal (x) is operationally connected to an estimator unit (2) to determine a measure ($f_{est}$) for the frequency of the input signal (x) and that the measure ($f_{est}$) for the frequency of the input signal (x) is fed to a variance unit (3), the output signal (v) of which is operationally connected to a comparator unit (4), wherein the comparator unit (4) is further provided with a predetermined threshold value (LT).

13. Device for performing the method according to one of the claims 3 to 8, **characterised in that** an input signal (x) is operationally connected to an estimator unit (2) to determine a measure ($f_{est}$) for the frequency of the input signal (x) and that the measure ($f_{est}$) for the frequency of the input signal (x) is fed to a variance unit (3), the output signal (v) of which is operationally connected to a comparator unit (4), wherein the comparator unit (4) is further provided with a predetermined threshold value (LT), and that the measure ($f_{est}$) for the frequency of the input signal (x) is provided to a coefficient calculation unit (5) for calculating filter coefficients which are transferable to a filter unit (6) which is connected to the input signal (x) on its input side and to a first switch contact (S1) of a switching unit (7) on its output side, wherein the input signal (x) is fed to a second switch contact (S2) of the switching unit (7) and that the output signal of the comparator unit (4) provides a control signal for the switching unit (7), whereby either the input signal (x) or the output signal of the filter unit (6) is switchable to the output (z) of the switching unit (7).

14. Device according to claim 13, **characterised in that** the filter unit (7) is a notch filter.

15. Device according to claim 14, **characterised in that** the notch filter contains zeros and possibly poles, whose positions may be configured by the measure ($f_{est}$) of the frequency.

16. Device according to one of the claims 12 to 15, **characterised in that** the measure ($f_{est}$) for the frequency is determinable from a ratio of at least two functions of which at least one is frequency-dependent.

17. Device according to claim 16, **characterised in that** the measure ($f_{est}$) for the frequency is determinable from a ratio of two functions, wherein one of the functions corresponds to a low-pass filter transfer function and the other function corresponds to the expected value of the input signal.

18. Hearing device according to one of the claims 13 to 17.

**Revendications**

1. Procédé pour la vérification de la présence d'une composante de signal (s) dans un signal d'entrée (x), le procédé consistant en,

- générer une mesure ($f_{est}$) d'un signal d'entrée (x) pour la fréquence du signal d'entrée (x),
- déterminer la variance des mesures ($f_{est}$) pour la fréquence du signal d'entrée (x),
- comparer la variance déterminée (v) avec une valeur de seuil (LT) et
- confirmer la présence de la composante de signal (s), si la variance (v) est dans une étendue prédéterminée par rapport à la valeur de seuil (LT) prédéterminée.

2. Procédé selon la revendication 1, **caractérisé en ce que** la présence de la composante de signal (s) est confirmée, si la variance (v) est plus petite que la valeur de seuil (LT) prédéterminée.

3. Procédé selon la revendication 1 ou 2, **caractérisé en ce que** la composante de signal (s) est supprimée dans le signal d'entrée (x).

4. Procédé selon une des revendications 1 à 3, **caractérisé en ce que** le signal d'entrée (x) est bande-limité pour la fréquence avant de la génération des mesures ($f_{es}$t).

5. Procédé selon une des revendications 1 à 4, **caractérisé en ce que** la mesure ($f_{est}$) est déterminée pour la fréquence d'une relation d'aux moins deux fonctions, au moins en une étant dépendante de fréquence.

6. Procédé selon la revendication 5, **caractérisé en ce que** la mesure ($f_{est}$) pour la fréquence est déterminée d'une relation de deux fonctions, l'une des fonctions correspond à une fonction de transmission de filtre passe-bas et l'autre fonction à la valeur attendue du signal d'entrée.

7. Procédé selon une des revendications 3 à 6, **caractérisé en ce que** pour la suppression de la composante de signal (s) dans le signal d'entrée (x) un filtre coupe-bande (6) est utilisé avec la fonction de transmission suivante :

$$H(z) = \frac{1 + b_1 \cdot z^{-1} + b_2 \cdot z^{-2}}{1 + a_1 \cdot z^{-1} + a_2 \cdot z^{-2}} \,,$$

cependant

$$a_1 = -2 \cdot r_P \cdot \cos\omega \, ,$$

$$b_1 = -2 \cdot r_Z \cdot \cos\omega \, ,$$

et

$$a_2 = r_P^2$$

$$b_2 = r_Z^2 \, .$$

8. Procédé selon une des revendications 3 à 6, **caractérisé en ce qu'**un filtre coupe-bande (6) est utilisé pour la suppression du composante de signal (s) dans le signal d'entrée (x) avec la fonction de transmission suivante:

$$H(z) = \frac{1 + fb_{prob} \cdot \left( b_1 \cdot z^{-1} + b_2 \cdot fb_{prob} \cdot z^{-2} \right)}{1 + fb_{prob} \cdot \left( a_1 \cdot z^{-1} + a_2 \cdot fb_{prob} \cdot z^{-2} \right)} \, ,$$

cependant

$$b_1 = -2 \cdot r_Z \cdot \left( \frac{f_{est}^2}{2} - 1 \right) \, ,$$

$$a_1 = -2 \cdot r_P \cdot \left( \frac{f_{est}^2}{2} - 1 \right)$$

$$b_2 = r_Z^2 \, ,$$

$$a_2 = r_P^2$$

et

$$fb_{prob} = \max\left[1 - k \cdot E\left\{\left|\overline{E}\{f_{est}\} - f_{est}\right|\right\}, 0\right]$$

et r étant une constante, dont la valeur est préférablement égale à 0.98, et k étant un paramètre de sensitivité pour ajustement de la caractéristique de contrôle, la valeur pour k est préférablement égale 10.

**9.** Utilisation du procédé selon une des revendications 3 à 8 pour la suppression de l'effet Larsen de signal.

**10.** Utilisation du procédé selon une des revendications 3 à 8 pour la suppression de l'effet Larsen dans un dispositif auditif.

**11.** Utilisation du procédé selon la revendication 1 ou 2 pour la détection de pression sur la touche à un dispositif de transmission de télécommunication avec option de fréquence.

**12.** Dispositif pour effectuer le procédé selon la revendication 1 ou 2, **caractérisé en ce qu'**un signal d'entrée (x) pour déterminer une mesure ($f_{est}$) pour la fréquence du signal d'entrée (x) est relié fonctionnellement à une entité d'estimateur (2) et que la mesure ($f_{est}$) est alimentée à une entité de variance (3) pour la fréquence du signal d'entrée (x), dont le signal d'exit est relié fonctionnellement avec une entité de comparateur (4), l'entité de comparateur (4) est de plus alimenté d'une valeur de seuil (LT) prédéterminée.

**13.** Dispositif pour effectuer le procédé selon une des revendications 3 à 8, **caractérisé en ce que** le signal d'entrée (x) pour la détermination d'une mesure ($f_{est}$) pour la fréquence des signaux d'entrée (x) est relié fonctionnellement à une entité d'estimateur (2), que la mesure ($f_{est}$) pour la fréquence du signal d'entrée (x) est alimentée d'une entité de variance (3), dont le signal d'exit (v) est relié fonctionnellement avec une entité de comparateur (4), l'entité de comparateur (4) est de plus alimentée d'une valeur de seuil (LT) prédéterminée, que la mesure ($f_{est}$) pour la fréquence du signal d'entrée (x) est alimentée de plus d'une entité de calcul de coefficient (5) pour le calcul des coefficients de filtre, qui sont transmissibles dans une entité de filtre (6), qui est du côté de l'entrée est reliée avec le signal d'entrée (x) et du côté d'exit avec un premier contact d'interrupteur (S1) d'une entité d'interrupteur (7), le signal d'entrée (x) étant alimenté à un deuxième contact d'interrupteur (S2) de l'entité d'interrupteur (7), et que le signal d'exit de l'entité de comparateur (4) fournit un signal de contrôle pour l'entité de l'interrupteur (7) par cela soit le signal d'entrée (x) ou le signal d'exit de l'entité de filtre (6) est commutable sur l'exit (z) de l'entité d'interrupteur (7).

**14.** Dispositif selon la revendication 13, **caractérisé en ce que** l'entité de filtre (7) est un filtre de coupe-bande.

**15.** Dispositif selon la revendication 14, **caractérisé en ce que** le filtre de coupe-bande comprend des positions de zéro et des positions de pôle si nécessaire, dont les positions sont préfixables par la mesure ($f_{est}$) pour la fréquence.

**16.** Dispositif selon une des revendications 12 à 15, **caractérisé en ce que** la mesure ($f_{est}$) pour la fréquence est déterminable d'une relation d'au moins deux fonctions, en une étant dépendante de fréquence.

**17.** Dispositif selon la revendications 16, **caractérisé en ce que** la mesure ($f_{est}$) pour la fréquence est déterminable d'une relation d'au moins deux fonctions, une des fonctions correspondant à une fonction de transmission de filtre passe-bas et que l'autre fonction correspond à la valeur estimée du signal d'entrée.

**18.** Dispositif auditif selon une des revendications 13 à 17.

FIG.1

FIG.2

FIG.3

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5680467 A
- EP 0656737 A
- WO 9926453 A
- WO 9951059 A
- DE 19748079

**In der Beschreibung aufgeführte Nicht-Patentliteratur**

- Probability, Random Variables, and Stochastic Processes. McGraw-Hill, 1984, 108 ff
- Multirate Digital Signal Processing. Prentice-Hall Signal Processing Series, Prentice-Hall, Inc, 1983